# FASCICULE DE BREVET EUROPEEN

(11) **EP 1 471 292 B1**
(45) Date de publication et mention de la délivrance du brevet: **02.11.2006**
(21) Numéro de dépôt: 04291021.6
(22) Date de dépôt: 16.04.2004
(51) Int. Cl.: F16H 61/32

(54) **Dispositif de commande de boîte de vitesses manuelle pilotée à grille de présélection et méthode de changement de rapport associée**
Steuerungsvorrichtung eines mit automatisierten Schaltgeriebe und Schaltverfahren
Device for control of changing speed in an automatized gearshift transmission and shifting method

(30) Priorité: 23.04.2003 FR 0304967
(43) Date de publication de la demande: 27.10.2004
(73) Titulaire: Peugeot Citroën Automobiles S.A., 78140 Vélizy Villacoublay (FR)
(72) Inventeur: Lelasseux, Xavier, 92150 Suresnes (FR)
(74) Mandataire: Thinat, Michel

(56) Documents cités:
- EP-A- 0 310 387
- EP-A- 1 329 651
- US-A- 4 601 369

## Description

L'invention concerne en général l'industrie automobile.

Plus précisément, l'invention concerne selon un premier aspect, un dispositif de commande d'une boîte de vitesses manuelle pilotée comprenant un dispositif de commande interne logé dans le carter de la boîte de vitesses et un dispositif électromécanique d'actionnement du dispositif de commande interne.

Des dispositifs de ce type sont connus de l'art antérieur, et comprennent typiquement un doigt de passage mobile déplacé par un premier actionneur entre une pluralité de positions de sélection dans lesquelles le doigt est engagé dans des éléments d'engagement de rapport, le doigt étant également déplacé par un second actionneur, à partir des positions de sélection, jusqu'à une pluralité de positions d'engagement, en entraînant par ce mouvement l'élément d'engagement sélectionné et en réalisant ainsi l'engagement ou le dégagement du rapport. Un tel dispositif est connu de la publication EP 0 310 387 A, qui divulgue les caractéristiques du préambule des revendications 1 et 10.

Ces dispositifs présentent le défaut d'être relativement lent.

Dans ce contexte, la présente invention a pour but de proposer un dispositif de commande plus rapide conformément à la revendication 1.

Dans un mode de réalisation possible de l'invention le dispositif de commande interne comprend un axe de guidage s'étendant dans la deuxième direction, l'axe de sélection présentant la forme d'un cylindre creux monté coulissant sur l'axe de guidage et présentant une fente s'étendant suivant la seconde direction, le pion comprenant une tige engagée à l'intérieur de l'axe de sélection à travers la fente, les moyens de liaison entre le pion et l'axe de sélection comprenant deux ressorts en spirale enfilés sur l'axe de guidage de part et d'autre du pion et disposés à l'intérieur de l'axe de sélection, ces ressorts étant chacun interposé entre un face axiale de l'axe de sélection et la tige.

Avantageusement, les deux ressorts sont précontraints.

De préférence, les ressorts sont chacun en appui par une extrémité sur une face axiale de l'axe de sélection et par une extrémité opposée sur la tige.

Par exemple, les ressorts sont chacun en appui par une extrémité sur une face axiale de l'axe de sélection et par une extrémité opposée sur un élément d'appui solidaire de l'axe de sélection.

Avantageusement, le pion comprend une tête conformée en plaque solidaire de la tige, et portant un trou oblong s'étendant dans la première direction, le pion entraînant le doigt en rotation par l'intermédiaire d'une goupille solidaire du doigt par une première partie et engagée dans le trou oblong par une seconde partie solidaire de la première.

De préférence, les moyens de blocage sélectif du pion comprennent une plaque de blocage portant une fente dessinant une grille de vitesses dans laquelle la goupille est engagée, cette grille comprenant un tronçon principal s'étendant dans un plan perpendiculaire à la première direction et dans lequel sont définies des positions de branchement de la goupille correspondant aux positions de sélection du doigt, et une pluralité de bras s'étendant dans la première direction à partir des positions de branchement d'un côté ou de l'autre du tronçon principal et correspondant aux positions d'engagement du doigt, la goupille passant d'un bras à un autre en suivant la grille quand le doigt de passage passe d'une position d'engagement à une autre.

Avantageusement, la plaque est conformée en secteur de cylindre dont l'axe de passage constitue l'axe de symétrie.

De préférence, le dispositif électromécanique d'actionnement comprend un moteur de sélection muni d'un arbre de sortie parallèle à la seconde direction et présentant une partie filetée, l'axe de sélection comprenant un orifice portant un filetage interne complémentaire de la partie filetée et traversé par celle-ci.

Selon un second aspect, l'invention concerne une méthode de changement de rapport de boîte de vitesses à l'aide d'un dispositif de commande présentant les caractéristiques avantageuses décrites dans la revendication 10.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un dispositif de commande selon l'invention,
- la figure 2 est une vue partielle suivant la flèche II de la figure 1, une partie de l'axe de sélection n'étant pas représentée pour laisser apparaître le pion et les ressorts disposés à l'intérieur de celui-ci,
- la figure 3 est une vue partielle en coupe, suivant les flèches III de la figure 2,
- la figure 4 est une vue partielle en coupe suivant les flèches IV de la figure 2,
- les figures 5A à 5C sont des vues de faces montrant les positions successives de la goupille dans la grille pour un changement de rapport avec présélection, et
- les figures 6A et 6B sont des représentations schématiques de la position du pion et des ressorts dans l'axe de sélection, avant et pendant la présélection, pour une variante de réalisation de l'invention.

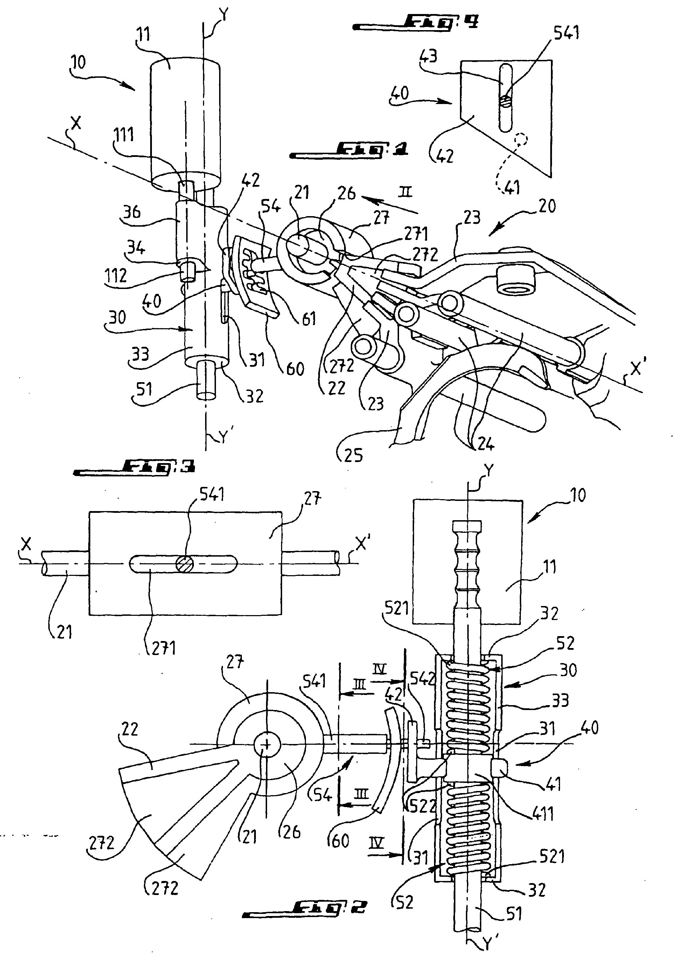

Le dispositif de commande représenté sur la figure 1 comprend un dispositif de commande interne 20 logé dans le carter de la boîte de vitesses, non représenté, et un dispositif électromécanique d'actionnement 10 du dispositif de commande interne 20.

Selon l'invention, ce dispositif de commande interne 20 comprend un axe de passage 21 s'étendant suivant une première direction X-X' et mobile en translation dans cette première direction, un doigt de passage 22 s'étendant perpendiculairement à l'axe de passage 21, et plusieurs éléments d'engagement de rapports 23 par l'intermédiaire de tiges parallèles coulissantes 24 auxquelles sont solidarisées des fourchettes 25 de déplacement de crabots permettant de réaliser l'engagement ou le dégagement des différents rapports de la boîte de vitesses.

Les tiges coulissantes 24 s'étendent toutes parallèlement à la première direction X-X'. Les éléments d'engagement de rapport 23 sont de type connu.

Le doigt 22 est mobile en rotation autour de l'axe de passage 21 entre une pluralité de positions de sélection dans lesquelles le doigt 22 est engagé dans un des éléments d'engagement de rapport 23.

Le doigt 22 est également lié à l'axe de passage 21 en translation dans la première direction X-X' et mobile avec cet axe, à partir des positions de sélection, jusqu'à une pluralité de positions d'engagement, en entraînant par ce mouvement l'élément d'engagement 23 sélectionné et en réalisant ainsi l'engagement ou le dégagement du rapport.

Le dispositif électromécanique 10 comprend à cet effet un moteur de passage, non représenté, entraînant l'axe de passage 21 en translation par l'intermédiaire d'une démultiplication de passage, non représentée. Cette démultiplication est de type connu, et comprend par exemple une roue dentée entraînée en rotation par le moteur de passage et engrenant une crémaillère portée par l'axe de passage 21. Le moteur de passage est apte à déplacer l'axe de passage 21 suivant la première direction X-X' dans les deux sens opposés.

Le dispositif de commande interne 10 comprend encore un axe de sélection 30 s'étendant suivant une seconde direction Y-Y' perpendiculaire à la première, et mobile par translation dans cette seconde direction entre une pluralité de positions axiales, un pion 40 sélectivement entraîné en translation dans la seconde direction Y-Y' par l'axe de sélection, des moyens de liaison entre le pion 40 et l'axe de sélection 30 permettant au pion 40 de se déplacer relativement à l'axe de sélection 30 dans la seconde direction Y-Y', suivant les deux sens opposés, à l'encontre de forces de rappels élastiques, et des moyens de blocage sélectif bloquant le pion 40 en translation dans la seconde direction Y-Y' quand le doigt 22 est dans une position d'engagement, et autorisant la translation du pion 40 quand le doigt 22 est dans une position de sélection.

Le pion 40 s'étend dans une direction perpendiculaire à la fois à la première direction X-X' et à la seconde direction Y-Y'.

Il entraîne lui-même en rotation le doigt 22 autour de l'axe de passage 21 de telle sorte que chaque position axiale de l'axe de sélection 30 corresponde à une position de sélection du doigt 22.

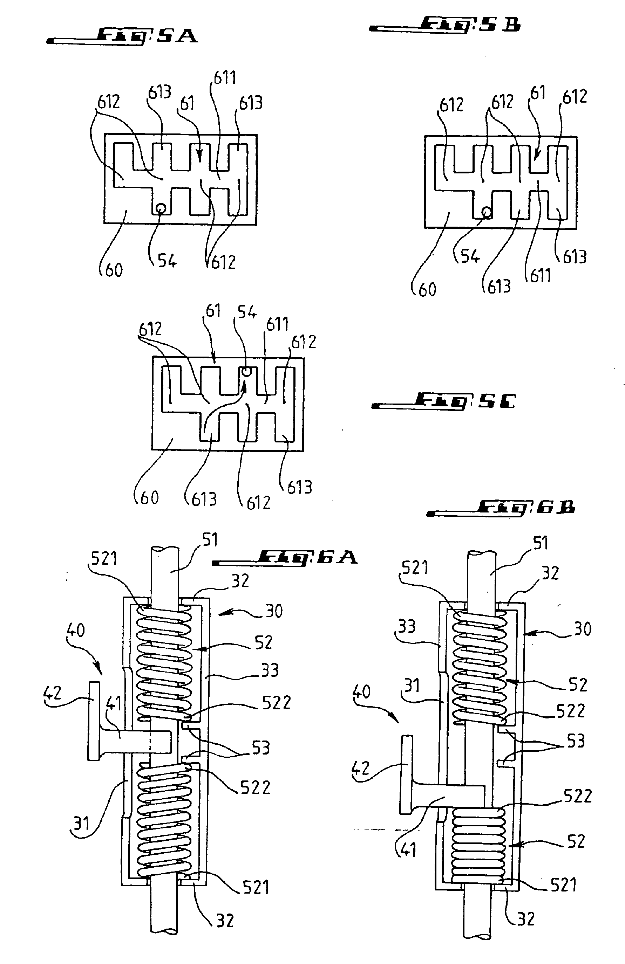

Comme on le voit sur la figure 2, le dispositif de commande interne comprend un axe de guidage 51 s'étendant dans la deuxième direction Y-Y', cet axe étant fixe relativement au carter de la boîte de vitesse.

L'axe de sélection 30 présente la forme d'un cylindre creux, coaxial à l'axe de guidage 51 et monté coulissant sur cet axe de guidage 51.

L'axe de sélection 30 comprend deux faces axiales opposées 32, et une face radiale 33, et porte sur sa face radiale deux fentes 31 parallèles, s'étendant suivant la seconde direction Y-Y', et diamétralement opposées le long de la circonférence de l'axe de sélection 30. Ces fentes 31 sont disposées au centre de l'axe de sélection 30 selon la seconde direction Y-Y', c'est-à-dire à mi-distance entre les deux faces axiales 32.

Le pion 40 comprend une tige droite 41, de section droite circulaire, s'étendant perpendiculairement à l'axe de guidage 51 et traversant radialement l'axe de sélection 30, et une tête 42 solidaire de la tige 41.

La tige 41 est engagée dans les deux fentes 31, traverse complètement l'axe de sélection 30, et fait saillie par deux extrémités opposées de chaque côté de cet axe.

Les fentes 31 présentent chacune une largeur, dans un plan perpendiculaire à la seconde direction Y-Y', sensiblement égale au diamètre de la tige 41, de telle sorte que celle-ci est guidée en translation dans les fentes 31.

La tige 41 est libre par rapport à l'axe de guidage 51. Dans ce but, le tige 41 peut par exemple comprendre une partie centrale 411 élargie dans un plan perpendiculaire à la seconde direction Y-Y', comprenant un orifice de guidage, non représenté, traversé par l'axe de guidage 51.

Le dispositif électromécanique d'actionnement comprend un moteur de sélection 11 fixe relativement au carter de la boîte de vitesse, muni d'un arbre de sortie 111 parallèle à la seconde direction Y-Y' et présentant une partie d'extrémité filetée 112.

L'axe de sélection 30 comprend une nervure 36 faisant saillie radialement sur un côté extérieur de la face radiale 33 et solidaire de celle-ci. Cette nervure est percée d'un orifice 34 s'étendant suivant la seconde direction Y-Y' et porte un filetage interne complémentaire de la partie filetée 112. La partie filetée 112 est engagée dans l'orifice 34

Le moteur de sélection 11 entraîne sélectivement l'arbre de sortie 111 en rotation dans les deux sens opposés, ce qui a pour effet d'entraîner l'axe de sélection 30 en translation relativement à l'arbre de sortie 111 et à l'axe de guidage 51.

Les moyens de liaison entre le pion 40 et l'axe de sélection 30 comprennent deux ressorts en spirale 52 identiques enfilés sur l'axe de guidage 51 de part et d'autre du pion 40 et disposés à l'intérieur de l'axe de sélection 30, ces ressorts 52 étant chacun interposé entre une des faces axiales 32 de l'axe de sélection 30 et la tige 41.

Selon un aspect avantageux de l'invention, les deux ressorts 52 sont précontraints.

Les ressorts 52 sont normalement chacun en appui par une extrémité 521 sur une face axiale 32 de l'axe de sélection 30 et par une extrémité opposée 522 sur la tige 41, de telle sorte qu'ils sont tous les deux comprimés.

L'extrémité 522 du ressort 52 peut par exemple prendre appui sur la partie élargie 411 de la tige 41, ou sur une portée de ressort non représentée solidaire de la tige 41.

Le pion 40 est normalement situé au centre de l'axe de sélection 30 suivant la seconde direction Y-Y', de telle sorte que les deux ressorts 52 sont comprimés de la même façon et exercent sur la tige 41 des forces élastiques qui s'équilibrent. Quand le pion 40 se déplace dans les fentes 31 d'un premier côté relativement à l'axe de sélection 30, le ressort 52 situé de ce premier côté subit une compression supplémentaire et le ressort 52 opposé se détend partiellement, le pion 40 subissant alors une force de rappel dans un sens opposé à son déplacement.

Dans une seconde variante de réalisation représentée sur les figures 6A et 6B, les ressorts 52 sont normalement chacun en appui par une extrémité 521 sur une face axiale 32 de l'axe de sélection 30 et par une extrémité opposée 522 sur un élément d'appui 53 solidaire de l'axe de sélection 30.

L'axe de sélection 30 ne porte, dans cette variante, qu'une seule fente 31, et la tige 41 du pion 40 ne traverse pas l'axe de sélection 30. Au contraire, cette tige 41 n'est engagée dans l'axe que sur deux tiers environ du diamètre de celui-ci.

Chaque élément d'appui 53 comprend par exemple une nervure en secteur d'anneau solidaire d'un côté intérieur de la face radiale 33, s'étendant dans un plan perpendiculaire à la seconde direction Y-Y' et diamétralement opposée à la fente 31 le long d'une circonférence de l'axe de sélection. Cette nervure s'étend sur un secteur angulaire d'environ 270°.

Comme le montrent les figures 6A et 6B, les deux éléments d'appui 53 s'étendent dans des plans situés de part et d'autre de la tige 41 suivant la seconde direction Y-Y'.

Le pion 40 est normalement situé au centre de l'axe de sélection 30 suivant la seconde direction Y-Y', de telle sorte que les deux ressorts 52 sont comprimés de la même façon, entre les nervures et les faces axiales 32. Ils n'exercent sur la tige 41 aucune sollicitation.

Quand le pion 40 se déplace dans la fente 31 d'un premier côté relativement à l'axe de sélection 30, le ressort 52 situé de ce premier côté subit une compression supplémentaire et le ressort 52 opposé reste en appui sur la nervure 53 correspondante. Le pion 40 subit alors une force de rappel dans un sens opposé à son déplacement du fait du ressort 52 qui est comprimé.

La tête 42 du pion 40 est solidaire d'une extrémité de la tige 41 tournée vers le doigt 22 et est conformée en une plaque mince s'étendant perpendiculairement à la tige 41.

Comme on le voit sur la figure 4, cette plaque présente une forme trapézoïdale de base parallèle à la seconde direction Y-Y', et portant un trou oblong 43 s'étendant dans la première direction X-X' et perçant la plaque dans toute son épaisseur.

Le pion 40 entraîne le doigt 22 en rotation par l'intermédiaire d'une goupille 54 solidaire du doigt 22 par une première partie 541 et engagée dans le trou oblong 43 par une seconde partie 542 solidaire de la première.

La goupille 54 est perpendiculaire à l'axe de passage 21 et s'étend dans une direction parallèle à la tige 41 du pion 40, ou suivant une direction faisant un angle réduit avec cette tige 41.

La première partie 541 de la goupille 54 est cylindrique de premier diamètre, et la seconde partie 542 est également cylindrique, coaxiale à la première partie, de second diamètre inférieur au premier.

La goupille 54 est libre en translation dans le trou oblong 43 quand le doigt 22 est entraîné en translation dans la première direction X-X' par l'axe de passage 21.

Cette goupille 54 pivote dans un plan perpendiculaire à la première direction X-X' quand le pion 40 se déplace dans la seconde direction Y-Y', sous l'effet des bords du trou oblong 43 entraînant la seconde partie de la goupille 54.

Le trou oblong 43 présente une largeur perpendiculairement à la première direction X-X' légèrement supérieure au second diamètre de la seconde partie 542 de la goupille 54, de telle sorte que cette seconde partie 542 peut pivoter à l'intérieur du trou oblong 43.

Comme on le voit sur la figure 1, le doigt de passage 22 est solidaire d'un fourreau 26 entourant l'axe de passage 21, la goupille 54 étant elle aussi solidaire de ce fourreau 26 par sa première partie 541. Le doigt 22 et la goupille 54 forment un angle de 150° environ dans un plan perpendiculaire à la première direction X-X'.

Le fourreau 26 est solidaire en translation de l'axe de passage 21, par exemple par l'intermédiaire de butées, non représentées, solidaires de l'axe de passage 21 et disposées de part et d'autre du fourreau 26. Le fourreau 26 est également libre en rotation autour de l'axe de passage 21.

Le pivotement de la goupille 54 entraîne le fourreau 26 et le doigt 22 en rotation autour de l'axe de passage 21.

Le dispositif de commande interne 20 comprend également manchon de guidage cylindrique 27, coaxial à l'axe de passage 21 et entourant le fourreau 26. Le manchon 27 est fixe en translation suivant la première direction X-X', l'axe de passage 21 et le fourreau 26 se déplaçant à l'intérieur de celui-ci.

Le manchon 27 comprend deux lumières 271 présentant des formes allongées dans la première direction X-X', et dans lesquelles sont engagés la première partie 541 de la goupille 54 et le doigt 22.

La goupille 54 et le doigt 22 se déplacent dans ces lumières 271 quand le fourreau 26 est entraîné en translation par l'axe de passage 21.

Par ailleurs, la lumière 271 dans laquelle est engagée la première partie 541 de la goupille 54 présente une largeur dans un plan perpendiculaire à la première direction X-X' correspondant au premier diamètre de cette première partie 541.

Quand la goupille 54 pivote, la première partie 541 vient en appui sur les bords de la lumière 271 correspondante et entraîne le manchon 27 en rotation.

Les moyens de blocage sélectif du pion 40 comprennent une plaque de blocage 60 portant une fente 61 dessinant une grille de vitesses dans laquelle la goupille 54 est engagée par sa deuxième partie 542.

La plaque 60 est une plaque mince, fixe relativement au carter de la boîte de vitesses. Elle est conformée en secteur de cylindre, dont l'axe de passage 21 constitue l'axe de symétrie.

La grille 61 est découpée dans cette plaque et comprend un tronçon principal 611 en arc de cercle dans lequel sont définies des positions de branchement 612 de la goupille 54 correspondant aux positions de sélection du doigt 22, et une pluralité de bras 613 s'étendant suivant la première direction X-X' à partir des positions de branchement 612 d'un côté ou de l'autre du tronçon principal 611 et correspondant aux positions d'engagement du doigt 22.

Le tronçon principal 611 s'étend dans le plan perpendiculaire à la première direction X-X' dans lequel la goupille 54 pivote quand elle est entraînée par le pion 40.

La grille 61 représentée sur les figures 5A/B/C comprend quatre positions de branchement 612, quatre bras 613 s'étendant d'un premier côté du tronçon principal 611, chacun à partir d'une position de branchement 612 différente, trois bras 613 s'étendant d'un second côté du tronçon principal opposé au premier, chacun à partir d'une position de branchement 612 différente.

La grille 61 comprend donc trois positions de branchement 612 dont partent deux bras 613 mutuellement alignés, et une position de branchement dont part un seul bras 613.

Chaque bras 613 est un segment droit se terminant par une extrémité borgne.

La goupille 54 passe d'un bras 613 à un autre en suivant la grille 61 quand le doigt de commande 22 passe d'une position d'engagement à une autre.

Comme le montre la figure 1, la plaque de blocage 60 est interposée entre la tête 42 du pion 40 et le manchon 27, la seconde partie 542 de la goupille 54 traversant la plaque avant de s'engager dans le trou oblong 43 du pion 40.

On comprend bien que, quand le doigt 22 est en position de sélection, la goupille 54 est engagée dans le tronçon principal 611, et peut donc être entraînée par le pion 40 qui se déplace dans la seconde direction Y-Y'. Le pion 40 est entraîné lui-même par l'axe de sélection 30, et reste fixe par rapport à cet axe car il est maintenu en position par les ressorts 52.

Au contraire, quand le doigt 22 est en position d'engagement, la goupille 54 est engagée dans un bras 613, et ne peut pas être entraînée par le pion 40 dans la seconde direction Y-Y'. Il se heurte alors à un des bords du bras 613. Quand l'axe de sélection 30 se déplace dans la seconde direction Y-Y', le pion 40 est maintenu en position par la goupille 54. Il en résulte un déplacement relatif du pion par rapport à l'axe de sélection 30, dans la fente 31, à l'encontre d'un des ressorts 52.

Les caractéristiques décrites ci-dessus permettent d'accélérer les changements de rapports de boîte de vitesses en effectuant une présélection de la position de sélection du doigt 22 avant de dégager le rapport, de la façon illustrée sur les figures 5A à 5C.

On décrit ci-dessous une séquence dans laquelle un premier rapport est engagé de façon normale, sans présélection, puis dans laquelle le passage du premier rapport à un second rapport est effectué avec présélection.
1/ Un premier rapport est engagé en déplaçant d'abord l'axe de sélection 30 jusqu'à une première position axiale correspondant à une première position de sélection du doigt 22, puis en déplaçant le doigt 22 jusqu'à une première position d'engagement par translation de l'axe de passage 21, la goupille 54 étant alors engagée dans un premier bras 613. Cette situation est représentée sur la figure 5A.
2/ La présélection est ensuite effectuée en déplaçant l'axe de sélection 30 jusqu'à une seconde position axiale, ce qui a pour effet de comprimer un des ressorts en spirale 52. Cette situation est représentée sur la figure 5B. Le pion 40 est sollicité dans le sens de déplacement de l'axe de sélection 30 par le ressort 52, mais est bloqué par la goupille 54 venant en appui contre un bord du bras 613 dans lequel cette goupille est engagée. Le pion 40, et par suite le doigt 22, ne se déplace donc pas.
3/ Le dégagement du premier rapport est effectué en ramenant le doigt 22 de sa première position d'engagement jusqu'à sa première position de sélection par translation de l'axe de passage 21. La goupille 54 est débloquée, et le ressort 52 comprimé se détend alors et déplace le pion 40, ce qui amène automatiquement le doigt 22 dans une seconde position de sélection correspondant à la seconde position axiale de l'axe de sélection 30. Le pion 40 est ramené à sa position normale au centre de l'axe de sélection.
4/ Enfin, le second rapport est engagé déplaçant l'axe de passage pour amener le doigt 22 de sa seconde position de sélection à une seconde position d'engagement correspondant au second rapport.

Cette séquence est plus rapide que la séquence normale de passage du premier au second rapport dans laquelle on dégage d'abord le premier rapport, puis on effectue le déplacement de l'axe de sélection, avant d'engager le second rapport. Le déplacement de l'axe de sélection de sa première à sa seconde position axiale (étape 2) est effectué en temps masqué, avant que le premier rapport ne soit dégagé.

Le temps pendant lequel il y a rupture du couple moteur est donc diminué.

On notera que le fait que les ressorts en spirale soient précontraints permet d'amortir plus vite les oscillations du pion quand celui-ci est ramené au centre de l'axe de sélection à l'étape 3 décrite ci-dessus.

La seconde variante de réalisation est particulièrement avantageuse car le pion ne subit pas d'effort dans sa position normale au centre de l'axe de sélection. Par ailleurs les oscillations du pion quand celui-ci est ramené au centre de l'axe de sélection à l'étape 3 décrite ci-dessus sont amorties encore plus vite que dans la première variante.

On notera que le doigt 22, dans le mode de réalisation de l'invention représente sur les figures 1 et 2, est double et comprend deux pièces identiques décalées angulairement par rotation autour de l'axe de passage 21.

En fonction de la position de sélection du doigt 22, l'une ou l'autre de ces pièces est engagée dans l'élément d'engagement sélectionné. Cette caractéristique permet de limiter la course du doigt 22 en rotation entre ses différentes positions de sélection.

Le manchon 27 porte sur une face radialement extérieure deux nervures 272 de guidage en translation du doigt 22. Ces nervures 272 sont deux secteurs d'anneau s'étendant dans un plan perpendiculaire à la première direction X-X' et centrés sur l'axe de passage 21.

Un premier secteur d'anneau s'étend entre les deux pièces identiques décalées angulairement. Le second secteur d'anneau s'étend le long d'une des deux pièces, d'un côté opposé au premier secteur d'anneau.

## Revendications

1. Dispositif de commande d'une boîte de vitesses manuelle pilotée comprenant un dispositif de commande interne (20) logé dans le carter de la boîte de vitesses et un dispositif électromécanique d'actionnement (10) du dispositif de commande interne (20), un axe de passage (21) s'étendant suivant une première direction (X-X') et mobile en translation dans cette première direction, un doigt de passage (22) s'étendant perpendiculairement à l'axe de passage (21), et plusieurs éléments d'engagement de rapports (23) par l'intermédiaire de tiges parallèles coulissantes (24) auxquelles sont solidarisées des fourchettes (25) de déplacement de crabots permettant de réaliser l'engagement ou le dégagement des différents rapports de la boîte de vitesses, un axe de sélection (30) s'étendant suivant une seconde direction (Y-Y') perpendiculaire à la première et mobile par translation dans cette seconde direction entre une pluralité de positions axiales, un pion (40) sélectivement entraîné en translation dans la seconde direction (Y-Y') par l'axe de sélection (30), **caractérisé en ce que**:
- le doigt (22) est mobile en rotation autour de l'axe de passage (21) entre une pluralité de positions de sélection dans lesquelles le doigt (22) est engagé dans un élément d'engagement de rapport (23),
- le doigt (22) est également lié à l'axe de passage (21) en translation dans la première direction (X-X') et mobile avec cet axe, à partir des positions de sélection, jusqu'à une pluralité de positions d'engagement, en entraînant par ce mouvement l'élément d'engagement (23) sélectionné et en réalisant ainsi l'engagement ou le dégagement du rapport,
- le pion (40) entraîne lui-même en rotation le doigt (22) autour de l'axe de passage (21) de telle sorte que chaque position axiale de l'axe de sélection (30) corresponde à une position de sélection du doigt (22),
- le dispositif de commande comprend des moyens de liaison entre le pion (40) et l'axe de sélection (30) permettant au pion (40) de se déplacer relativement à l'axe de sélection (30) dans la seconde direction (Y-Y'), suivant les deux sens opposés, à l'encontre de forces de rappels élastiques
- le dispositif de commande comprend des moyens de blocage sélectif (60,54) bloquant le pion (40) en translation dans la seconde direction (Y-Y') quand le doigt (22) est dans une position d'engagement, et autorisant la translation du pion (40) quand le doigt (22) est dans une position de sélection.

2. Dispositif selon la revendication 1, **caractérisé en ce que** le dispositif de commande interne (20) comprend un axe de guidage (51) s'étendant dans la deuxième direction (Y-Y'), l'axe de sélection (30) présentant la forme d'un cylindre creux monté coulissant sur l'axe de guidage (51) et présentant une fente (31) s'étendant suivant la seconde direction (Y-Y'), le pion (40) comprenant une tige (41) engagée à l'intérieur de l'axe de sélection (30) à travers la fente (31), les moyens de liaison entre le pion et l'axe de sélection comprenant deux ressorts en spirale (52) enfilés sur l'axe de guidage (51) de part et d'autre du pion (40) et disposés à l'intérieur de l'axe de sélection (30), ces ressorts (52) étant chacun interposé entre une face axiale (32) de l'axe de sélection (30) et la tige (41).

3. Dispositif selon la revendication 2, **caractérisé en ce que** les deux ressorts (52) sont précontraints.

4. Dispositif selon la revendication 3, **caractérisé en ce que** les ressorts (52) sont chacun en appui par une extrémité sur une face axiale (32) de l'axe de sélection (30) et par une extrémité opposée sur la tige (41).

5. Dispositif selon la revendication 3, **caractérisé en ce que** les ressorts (52) sont chacun en appui par une extrémité sur une face axiale (32) de l'axe de sélection (30) et par une extrémité opposée sur un élément d'appui (53) solidaire de l'axe de sélection (30).

6. Dispositif selon l'une quelconque des revendications 2 à 5, **caractérisé en ce que** le pion (40) comprend une tête (42) conformée en plaque solidaire de la tige (41), et portant un trou oblong (43) s'étendant dans la première direction (X-X'), le pion (40) entraînant le doigt (22) en rotation par l'intermédiaire d'une goupille (54) solidaire du doigt (22) par une première partie (541) et engagée dans le trou oblong (43) par une seconde partie (542) solidaire de la première .

7. Dispositif selon la revendication 6, **caractérisé en ce que** les moyens de blocage sélectif du pion comprennent une plaque de blocage (60) portant une fente (61) dessinant une grille de vitesses dans laquelle la goupille (54) est engagée, cette grille (61) comprenant un tronçon principal (611) s'étendant dans un plan perpendiculaire à la première direction (X-X') et dans lequel sont définies des positions de branchement (612) de la goupille (54) correspondant aux positions de sélection du doigt (22), et une pluralité de bras (613) s'étendant dans la première direction (X-X') à partir des positions de branchement (612) d'un côté ou de l'autre du tronçon principal (611) et correspondant aux positions d'engagement du doigt (22), la goupille (54) passant d'un bras à un autre en suivant la grille (61) quand le doigt de passage (22) passe d'une position d'engagement à une autre.

8. Dispositif selon la revendication 7, **caractérisé en ce que** la plaque de blocage (60) est conformée en secteur de cylindre dont l'axe de passage (21) constitue l'axe de symétrie.

9. Dispositif selon l'une quelconque des revendications précédentes, **caractérisé en ce que** le dispositif électromécanique d'actionnement (10) comprend un moteur de sélection (11) muni d'un arbre de sortie (111) parallèle à la seconde direction (Y-Y') et présentant une partie filetée (112), l'axe de sélection (30) comprenant un orifice (34) portant un filetage interne complémentaire de la partie filetée (112) et traversé par celle-ci.

10. Méthode de changement de rapport de boîte de vitesses à l'aide d'un dispositif de commande selon l'une quelconque des revendications précédentes combinée avec la revendication 7, **caractérisée en ce qu'**elle comprend les étapes suivantes :
1/ engager un premier rapport en déplaçant d'abord l'axe de sélection (30) jusqu'à une première position axiale correspondant à une première position de sélection du doigt (22), puis déplacer le doigt (22) jusqu'à une première position d'engagement ;
2/ déplacer l'axe de sélection (30) jusqu'à une seconde position axiale, ce qui a pour effet de comprimer un des ressorts (52) ;
3/ ramener le doigt (22) de sa première position d'engagement jusqu'à sa première position de sélection par translation de l'axe de passage (21), le ressort (52) comprimé se détendant alors et amenant automatiquement le doigt (22) dans une seconde position de sélection correspondant à la seconde position axiale de l'axe de sélection (30),
4/ déplacer l'axe de passage (21) pour amener le doigt (22) de sa seconde position de sélection à une seconde position d'engagement.

## Claims

1. Command device for a piloted manual gearbox comprising an internal command device (20) housed in the gearbox casing and an electromechanical device (10) actuating the internal control device (20), a gearshift shaft (21) extending along a first direction (X-X') and mobile in translation in this first direction, a shift finger (22) extending perpendicularly to the gearshift shaft (21), and several elements for engaging gears (23) via sliding parallel rods (24) to which dog clutch displacement forks (25) are joined allowing the engaging or disengaging of the different gear ratios, a selector shaft (30) extending along a second direction (Y-Y') perpendicular to the first and mobile by translation in this second direction between a plurality of axial positions, a pin (40) selectively driven in translation in the second direction (Y-Y') by the selector shaft (30)
**characterized in that**:
- the finger (22) is mobile in rotation about the gearshift shaft (21) between a plurality of selection positions in which the finger (22) is engaged in a ratio engaging element (23),
- the finger (22) is also linked to the gearshift shaft (21) in translation in the first direction (X-X') and mobile with this shaft, from the selection positions, as far as a plurality of engagement positions, driving the selected engaging element (23) with this movement and thereby achieving the engaging or disengaging of the ratio,
- the pin (40) itself drives the finger (22) in rotation about the gearshift shaft (21) so that each axial position of the selector shaft (30) corresponds to a selection position of the finger (22),
- the command device comprises linkage means between the pin (40) and the selector shaft (30) allowing the pin (40) to move with respect to the selector shaft (30) in the second direction (Y-Y'), in the two opposite directions, against elastic return forces,
- the command device comprises selective locking means (60,54) locking the pin (40) in translation in the second direction (Y-Y') when the finger (22) is in an engaged position, and allowing translation of the pin (40) when the finger (22) is in a selection position.

2. Device as in claim 1, **characterized in that** the internal command device (20) comprises a guide shaft (51) extending in the second direction (Y-Y'), the selector shaft (30) being of hollow cylindrical shape mounted slidingly on the guide shaft (51) and having a slot (31) extending in the second direction (Y-Y'), the pin (40) comprising a rod (41) engaged inside the selector shaft (30) through the slot (31), the linkage means between the pin and the selector shaft comprising two spiral springs (52) threaded on the guide shaft (51) either side of the pin (40) and arranged inside the selector shaft (30), these springs (52) each being inserted between an axial surface (32) of the selector shaft (30) and the rod (41).

3. Device as in claim 2, **characterized in that** the two springs (52) are pre-stressed.

4. Device as in claim 3, **characterized in that** one end of each spring (52) bears upon an axial surface (32) of the selector shaft (30) and the opposite end bears upon the rod (41).

5. Device as in claim 3, **characterized in that** one end of each spring (52) bears upon an axial surface (32) of the selector shaft (30) and the opposite end bears upon a bearing element (53) joined to the selector shaft (30).

6. Device as in any of claims 2 to 5, **characterized in that** the pin (40) comprises a head (42) conformed as a plate joined to the rod (41) and carrying an oblong hole (43) extending in the first direction (X-X'), the pin (40) driving the finger (22) in rotation via a dowel pin (54) joined to the finger (22) by a first part (541) and engaged in the oblong hole (43) by a second part (542) joined to the first.

7. Device as in claim 6, **characterized in that** the selective locking means of the pin comprise a locking plate (60) comprising a slot (61) forming a gear gate in which the dowel pin (54) is engaged, this gate (61) comprising a main section (611) extending along a plane perpendicular to the first direction (X-X') and in which branch positions (612) of the dowel pin (54) are defined corresponding to the selection positions of the finger (22), and a plurality of arms (613) extending along the first direction (X-X') from the branch positions (612) on one side or another of the main section (611) and corresponding to the engaging positions of the finger (22), the dowel pin (54) passing from one arm to another following the gate (61) when the shift finger (22) shifts from one engagement position to another.

8. Device as in claim 7, **characterized in that** the locking plate (60) is conformed as a cylinder section for which the gearshift shaft (21) forms the axis of symmetry.

9. Device as in any of the preceding claims, **characterized in that** the electromechanical actuating device (10) comprises a selector motor (11) provided with an output shaft (111) parallel to the second direction (Y-Y') and having a threaded part (112), the selector shaft comprising an orifice (34) carrying an inner thread complementary to the threaded part (112) which passes through it.

10. Method for changing a gearbox gear ratio using a command device as in any of the preceding claims combined with claim 7, **characterized in that** it comprises the following steps:
1/ engaging a first ratio by firstly moving the selector shaft (30) as far as a first axial position corresponding to a first selection position of the finger (22), then moving the finger (22) as far as a first engagement position,
2/ moving the selector shaft (30) as far as a second axial position, whose effect is to compress one of the springs (52);
3/ bringing the finger (22) back from its first engagement position to its first selection position by translating the gearshift shaft (21), the compressed spring (52) then being released and automatically bringing the finger (22) to a second selection position corresponding to the second axial position of the selector shaft (30);
4/ moving the gearshift shaft (21) to bring the finger (22) from its second selection position to a second engagement position.

## Patentansprüche

1. Vorrichtung zur Steuerung eines gelenkten manuellen Getriebes, eine interne Steuervorrichtung (20) aufweisend, die im Gehäuse des Getriebes eingebaut ist, und eine elektromechanische Antriebsvorrichtung (10) der internen Steuervorrichtung (20), eine Durchgangsachse (21), die sich in eine erste Richtung (X-X') erstreckt und in dieser ersten Richtung beweglich verschiebbar ist, einen Durchgangsfinger (22), der sich senkrecht zur Durchgangsachse (21) erstreckt, und mehrere Gangeingriffelemente (23) mit parallelen Gleitstangen (24), an denen Glieder (25) zur Verschiebung von Klauen befestigt sind, mit denen die verschiedenen Gänge des Getriebes eingelegt und herausgenommen werden können, wobei sich eine Wahlachse (30) in eine zweite Richtung (Y-Y') senkrecht zur ersten Achse und beweglich verschiebbar in dieser zweiten Richtung zwischen einer Vielzahl axialer Stellungen erstreckt, ein Element (40), das wahlweise in der zweiten Richtung (Y-Y') von der Wahlachse (30) angetrieben wird, **dadurch gekennzeichnet, dass**:
- der Finger (22) um die Durchgangsachse (21) rotierend beweglich ist zwischen einer Vielzahl von Wahlstellungen, in denen der Finger (22) in ein Gangeingriffelement (23) eingreift,
- der Finger (22) ebenfalls mit der Durchgangsachse (21) verbunden ist, die sich in der ersten Richtung (X-X') verschiebt, und mit dieser Achse aus Wahlstellungen in eine Vielzahl von Eingriffstellungen bewegbar, wobei er durch diese Bewebung das ausgewählte Eingriffelement (23) antreibt und damit das Einlegen oder Herausnehmen des Ganges durchführt,
- das Element (40) selbst den Finger (22) rotierend um die Durchgangsachse (21) derart antreibt, so dass jede axiale Stellung der Wahlachse (30) mit einer Wahlstellung des Fingers (22) übereinstimmt,
- das Steuerelement Mittel zur Verbindung zwischen dem Element (40) und der Wahlachse (30) umfasst, die es dem Element (40) erlauben, sich in Bezug zur Wahlachse (30) in der zweiten Richtung (Y-Y') im Hinblick auf elastische Rückholkräfte in zwei entgegengesetzte Richtungen zu verschieben,
- das Steuerelement selektive Blockiermittel (60, 54) umfasst, die das Element (40) in der Verschiebung in der zweiten Richtung (Y-Y') blockieren, wenn sich der Finger (22) in einer Eingriffstellung befindet, und die Verschiebung des Elements (40) erlauben, wenn der Finger (22) in einer Wahlstellung ist.

2. Vorrichtung nach Anspruch 1, **dadurch gekennzeichnet, dass** die interne Steuervorrichtung (20) eine Führungsachse (51) umfasst, die sich in die zweite Richtung (Y-Y') erstreckt, wobei die Wahlachse (30) die Form eines Hohlzylinders aufweist, der gleitend auf der Führungsachse (51) montiert ist und einen Schlitz (31) aufweist, der sich in die zweite Richtung (Y-Y') erstreckt, wobei das Element (40) eine Stange (41) umfasst, die durch den Schlitz (31) in die Wahlachse (30) eingreift, wobei die Verbindungsmittel zwischen dem Element und der Wahlachse zwei Spiralfedern (52) umfassen, die auf der Führungsachse zu beiden Seiten des Elementes (40) aufgestreift sind und in der Wahlachse (30) angeordnet, wobei diese Federn (52) jeweils zwischen einer axialen Seite (32) der Wahlachse (30) und dem Stift (41) angeordnet sind.

3. Vorrichtung nach Anspruch 2, **dadurch gekennzeichnet, dass** die zwei Federn (52) vorgespannt sind.

4. Vorrichtung nach Anspruch 3, **dadurch gekennzeichnet, dass** sich die Federn (52) jeweils mit einem Ende auf eine axiale Seite (32) der Wahlachse (30) und mit einem gegenüberliegenden Ende auf den Stift (41) abstützen.

5. Vorrichtung nach Anspruch 3, **dadurch gekennzeichnet, dass** sich die Federn (52) jeweils mit einem Ende auf eine axiale Seite (32) der Wahlachse (30) und mit einem gegenüberliegenden Ende auf ein Abstützelement (53) abstützen, das mit der Wahlachse (30) verbunden ist.

6. Vorrichtung nach einem der Ansprüche 2 bis 5, **dadurch gekennzeichnet, dass** das Element (40) einen Kopf (42) umfasst, der in Form einer mit dem Stift (41) verbundenen Platte ausgebildet ist, und ein Langloch (43) trägt, das sich in die erste Richtung (X-X') erstreckt, wobei das Element (40) den Finger (22) rotierend über einen Zapfen (54) antreibt, der mit dem Finger (22) mit einem ersten Teil (541) verbunden ist und in das Langloch (43) mit einem zweiten Teil (542) eingreift, das mit dem ersten verbunden ist.

7. Vorrichtung nach Anspruch 6, **dadurch gekennzeichnet, dass** die selektiven Blockiermittel des Elements eine Blockierplatte (60) umfassen mit einem Schlitz (61), der ein Geschwindigkeitsgitter ausbildet, in das der Zapfen (54) eingreift, wobei dieses Gitter (61) einen Hauptabschnitt (611) aufweist, der sich senkrecht zur ersten Richtung (X-X') erstreckt und in welchem Verzweigungsstellungen (612) des Zapfens (54) definiert sind, die den Wahlstellungen des Fingers (22) entsprechen, und eine Vielzahl von Armen (613), die sich ausgehend von den Verzweigungsstellungen (612) an der einen oder anderen Seite des Hauptabschnitts (611) in die erste Richtung (X-X') erstrecken und den Eingriffstellungen des Fingers (22) entsprechen, wobei der Zapfen (54) von einem Arm zum anderen übergeht, indem er dem Gitter (61) folgt, wenn der Durchgangsfinder (22) von einer Eingriffstellung in eine andere übergeht.

8. Vorrichtung nach Anspruch 7, **dadurch gekennzeichnet, dass** die Blockierplatte (60) als Zylinderabschnitt ausgebildet ist, dessen Durchgangsachse (21) die Symmetrieachse darstellt.

9. Vorrichtung nach einem der vorhergehenden Ansprüche, **dadurch gekennzeichnet, dass** die elektromechanische Antriebsvorrichtung (10) einen Wahlmotor (11) umfasst, der mit einer Ausgangswelle (111) parallel zur zweiten Richtung (Y-Y') ausgestattet ist, die einen Gewindeteil (112) aufweist, wobei die Wahlachse (30) eine Öffnung (34) mit einem zum Gewindeteil (112) komplementären Innengewinde aufweist, die von diesem durchquert wird.

10. Methode zum Wechseln des Ganges des Getriebes mit Hilfe einer Steuervorrichtung nach einem der vorhergehenden Ansprüche in Kombination mit Anspruch 7, **dadurch gekennzeichnet, dass** sie die folgenden Schritte umfasst:
1) Einlegen eines ersten Ganges, indem man zunächst die Wahlachse (30) bis zu einer ersten axialen Stellung verschiebt, die einer ersten Wahlstellung des Fingers (22) entspricht, und danach den Finger (22) bis zu einer ersten Eingriffstellung verschiebt;
2) Verschieben der Wahlachse (30) bis zu einer zweiten axialen Stellung, wodurch eine der Federn (52) komprimiert wird;
3) Rückführung des Fingers (22) aus seiner ersten Eingriffstellung in seine erste Wahlstellung durch Verschiebung der Durchgangsachse (21), wobei sich dann die komprimierte Feder (52) entspannt und den Finger (22) automatisch in eine zweite Wahlstellung führt, die der zweiten axialen Stellung der Wahlachse (30) entspricht,
4) Verschiebung der Durchgangsachse (21), um den Finger (22) von seiner zweiten Wahlstellung in eine zweite Eingriffstellung zu führen.
